# EUROPÄISCHE PATENTANMELDUNG

(11) **EP 0 839 873 A1**
(43) Veröffentlichungstag der Anmeldung: **06.05.1998**
(21) Anmeldenummer: 97117561.7
(22) Anmeldetag: 10.10.1997
(51) Int. Cl.: C09B 47/24, C09B 69/04, C09B 67/54

(54) **Verfahren zur Herstellung von sulfonsäuregruppenhaltigen Cu-Phthalocyaninfarbstoffen**

(30) Priorität: 31.10.1996 DE 19645105
(71) Anmelder: BASF AKTIENGESELLSCHAFT, 67056 Ludwigshafen (DE)
(72) Erfinder: Bermes, Rudolf, Dr., 67069 Ludwigshafen (DE)

(57) **Zusammenfassung**

Die Erfindung betrifft ein Verfahren zur Herstellung von sulfonsäuregruppenhaltigen Cu-Phthalocyaninfarbstoffen mit einem Absorptionsmaximum λₘₐₓ ≥ 605 nm, das dadurch gekennzeichnet ist, daß man Cu-Phthalocyanin mit mindestens 15 %igem Oleum so lange auf Temperaturen von ungefähr 50 bis 110°C erhitzt, bis das Reaktionsprodukt ein Absorptionsmaximum ≥ 605 nm aufweist, anschließend das erhaltene Sulfierungsprodukt mit Wasser verdünnt, ein tertiäres, lipophiles Amin zugibt und bei erhöhter Temperatur so lange rührt, bis sich die das Ammoniumsalz enthaltende lipophile Phase von der wäßrig-schwefelsauren Phase abtrennt, anschließend die lipophile Phase gegebenenfalls nach dem Waschen mit Wasser, mit einer wasserlöslichen Base, deren sulfonsaures Salz hergestellt werden soll, und Wasser versetzt, die entstehenden Phasen trennt und das Salz in der wäßrigen Lösung beläßt oder es daraus isoliert.

Die erfindungsgemäß hergestellten Produkte eignen sich insbesondere zum Färben von cellulosischen Fasern oder von Polyamiden.

## Beschreibung

Die Erfindung betrifft ein Verfahren zur Herstellung von sulfonsäuregruppenhaltigen Cu- Phthalocyaninfarbstoffen mit einem Absorptionsmaximum λₘₐₓ ≥ 605 nm.

Sulfierte Naphthochinophthalone mit Tri-2-ethylhexylamin als Kation sind aus der EP-A-145 003 bekannt. Diese Salze werden durch Extraktion der Sulfonsäuren aus dem bei der Sulfierung erhaltenen Gemisch mit den Aminen entsprechend dem in der EP-A-53 220 beschriebenen Verfahren hergestellt.

Sulfierte Cu-Phthalocyaninfarbstoffe sind bekannt und im Handel als Pulver und Flüssigeinstellungen verfügbar. Sie werden üblicherweise durch Sulfierung von Cu-Phthalocyanin mit Oleum gewonnen, wobei nach der Sulfierung der Farbstoff durch Zugabe von Wasser, Eis und Salz ausgefällt, abfiltriert, gewaschen und gegebenenfalls in eine Flüssigeinstellung überführt wird. Ein repräsentatives Beispiel für diese Arbeitsweise ist z.B. Beispiel 1 der DE-AS-27 19 719.

Nachteilig bei dieser Arbeitsweise ist der große, durch Ausfällung, Filtration und Waschungen bedingte Herstellungsaufwand und Ausbeuteverluste. Ferner lassen sich selbst durch gründliches Waschen anorganische Salze nicht quantitativ entfernen. Daher war Aufgabe der vorliegenden Erfindung ein Verfahren, das diese Nachteile nicht aufweist.

Demzufolge wurde ein Verfahren zur Herstellung von sulfonsäuregruppenhaltigen Cu-Phthalocyaninfarbstoffen mit einem Absorptionsmaximum λₘₐₓ. ≥ 605 nm gefunden, das dadurch gekennzeichnet ist, daß man Cu-Phthalocyanin mit mindestens 15 gew. %igem Oleum so lange auf Temperaturen von ungefähr 50 bis 110°C erhitzt, bis das Reaktionsprodukt ein Absorptionsmaximum ≥ 605 nm aufweist, anschließend das erhaltene Sulfierungsprodukt mit Wasser verdünnt, ein tertiäres, lipophiles Amin zugibt und bei erhöhter Temperatur so lange rührt, bis sich die das Ammoniumsalz en-thaltende lipophile Phase von der wäßrig-schwefelsauren Phase abtrennt, anschließend die lipophile Phase gegebenenfalls nach dem Waschen mit Wasser, mit einer wasserlöslichen Base, deren sulfonsaures Salz hergestellt werden soll, und Wasser versetzt, die entstehenden Phasen trennt und das Salz in der wäßrigen Lösung beläßt oder es daraus isoliert.

Das erfindungsgemäße Verfahren zeichnet sich durch verbesserte Raum/Zeit-Ausbeuten aus, die im wesentlichen auf dem Wegfall der Abscheidung des Sulfierungsproduktes als Feststoff und der vereinfachten Handhabung der Flüssigphasen beruhen. Außerdem ist die Ausbeute an den gewünschten Verbindungen in der Regel nahezu quantitativ.

Die Sulfierung beim erfindungsgemäßen Verfahren wird zweckmäßigerweise mit 15 bis 35 gew. -%igem, vorzugsweise 20 bis 30 gew. -%igem Oleum, und bei Temperaturen von ungefähr 50 bis 110, vorzugsweise 60 bis 100°C, vorgenommen. Es hat sich gezeigt, daß Sulfierungsprodukte mit Absorptionsmaxima von 605 bis 625 nm (gemessen in verdünnter, wäßriger Lösung) für die weitere Umsetzung besonders geeignet sind, wobei für Flüssigeinstellungen Werte von λₘₐₓ 610 nm bevorzugt sind.

Üblicherweise wird pro Gewichtseinheit Cu-Phthalocyanin die 3,5-bis 7-fache, vorzugsweise 4- bis 5-fache Menge Oleum verwendet.

Nach der Sulfierung wird die Reaktionsmischung in Wasser eingegossen, das schon das tertiäre, lipophile Amin enthalten kann oder dem dieses anschließend zugesetzt wird. Das Amin wird in äquivalenter Menge zweckmäßigerweise im Überschuß bezogen auf die Anzahl der Sulfogruppen im Cu-Phthalocyanin verwendet.

Als tertiäre lipophile Amine eignen sich z.B. solche mit C₆- bis C₁₂-Alkylketten, wie Tri-n-octylamin, Methyldioctylamin, Methyldidecylamin, Methyldodecylamin, Tridodecylamin, Isobutyl -di-2-ethylhexylamin und insbesondere Tri-2-ethylhexylamin.

Die Mischung aus sulfiertem Cu-Phthalocyanin, Schwefelsäure, Wasser und Amin wird bei erhöhter Temperatur, z.B. 90 bis 100°C, gerührt und anschließend die Rührung abgestellt. Nach der daraufhin erfolgenden Phasentrennung wird die wäßrig-schwefelsaure Phase verworfen.

Als wasserlösliche Basen für die Überführung der Sulfonsäure aus der organischen Phase zurück in die Wasserphase und gleichzeitig in das gewünschte wasserlösliche Cu-Phthalocyaninsalz sind beispielsweise Alkalibasen, Ammoniumhydroxid oder hydrophile Amine geeignet.

Wenn bei den Aminen und deren Sulfonaten von der Löslichkeit oder Unlöslichkeit in Wasser bzw. von der zur Trennung von der wäßrigen Phase ausreichenden Lipophilie die Rede ist, so ist dabei stets an eine für praktische Zwecke im Sinne der Erfindung ausreichende Löslichkeit oder Unlöslichkeit bzw. Trennfähigkeit gedacht. Verluste bzw. Verunreinigungen von weniger Prozent, die auf einer nicht 100%igen Unlöslichkeit beruhen, können je nach Umständen in Kauf genommen oder durch Wiederholung der Trennoperation minimiert werden.

Zur Überführung in Pulverfarbstoffe kann die lipophile Phase direkt mit wäßrigem Alkali, wie Lithiumhydroxid, Kaliumhydroxid, vorzugsweise Natriumhydroxid, behandelt und die wäßrige Phase dann abgetrennt und durch Trocknen in den Pulverfarbstoff überführt werden. Das lipophile Amin wird nach der Abtrennung der Farbstofflösung zurückgewonnen.

Zur Herstellung der Flüssigeinstellung ist es zweckmäßig, die den Farbstoff enthaltende Phase mit heißem Wasser zu waschen, wobei eine einmalige Wäsche in der Regel ausreicht.

Anschließend kann die Flüssigeinstellung durch Behandeln der lipophilen Phase mit hydrophilen Aminen und Wasser gewonnen werden. Das lipophile Amin wird zurückgewonnen und kann wieder-verwendet werden. In der Regel wird eine äquivalente oder größere Menge hydrophiles Amin verwendet.

Für die Herstellung der Flüssigeinstellungen besonders geeignete hydrophile Amine sind Alkanolamine wie Mono-, Di- und Triethanolamin, Mono- oder Di-C₁-C₄-Alkylmono- oder -diethanolamine, die entsprechenden Propanolamine oder ähnliche Verbindungen.

Die Flüssigeinstellungen können wie üblich durch die Zugabe von Wasser und Amin auf die gewünschte Farbstärke und den pH-Wert eingestellt werden. Die Zugabe von Lösungsmitteln ist ebenfalls möglich. Solche Lösungsmittel sind z.B. Glykole und deren Ether, wie Di- oder Triglykol, Neopentylglykol, Mono-, Di- oder Tripropylenglykol sowie die C₁- bis C₄-Alkylmonoether dieser Verbindungen. In Abhängigkeit vom Verwendungszweck kommen auch N-Methylpyrrolidon, Caprolactam oder Harnstoff in Betracht.

Die Pulver- und Flüssigeinstellungen der erfindungsgemäß her-gestellten Verbindungen eignen sich insbesondere zum Färben von cellulosischen Fasern und Polyamiden, wie Textilien und Papier.

Die als Zwischenprodukte erhaltenen Cu-Phthalocyaninfarbstoffe mit Absorptionsmaximum λₘₐₓ ≥ 605 nm mit einem lipophilen Amin als Kation lassen sich leicht abtrennen und anschließend in das Farbstoffsalz mit dem gewünschten Gegenion überführt. Besonders vorteilhaft sind Cu-Phthalocyaninfarbstoffe mit einem Absorptions-maximum λₘₐₓ ≥ 605 nm mit Tri-2-ethylhexylamin als Kation.

In den folgenden Beispielen beziehen sich Angaben über Teile und Prozente, sofern nicht anders vermerkt, auf das Gewicht.

### Beispiel 1

63,4 Teile (0,11 Mo1) Kupferphthalocyanin wurden in 425,2 Teile Oleum (24,8 %) in zwei Stunden eingetragen und auf 60°C erwärmt. Nach dreißigstündigem Rühren (λₘₐₓ = 607 nm) bei dieser Temperatur wurde der auf 30°C abgekühlte Ansatz mit 24 Teilen Wasser unter Kühlung vorverdünnt und in 1650 Teile Wasser eingerührt. Sodann setzte man 266 Teile Tri-ethylhexylamin zu, erhitzte das Gemisch auf 100°C und stellte nach einer Stunde den Rührer ab. Unter dem dünnflüssigen Farbharz setzte sich unten eine farblose wäßrige Phase ab, von der 1793 Teile abgetrennt wurden. Danach wurde die den Farbstoff enthaltende Phase mit 444 Teilen Wasser und 79 Teilen Natriumhydroxid dreißig Minuten lang bei 100°C verrührt, wobei sich der Farbstoff in der wäßrigen Phase auflöste. Nach einstündigem Absitzen trennte man unten 824 Teile wäßrigalkalische Farbstofflösung ab, die nach dem Eindampfen 211 Teile eines Pulverfarbstoffes hinterließ, der bei 607 nm sein Absorptionsmaximum hat. Daneben wurden 261 Teile Tri-2-ethylhexylamin zurückgewonnen.

### Beispiel 2

63,4 Teile Kupferphthalocyanin wurden während 75 Minuten in 425,2 Teile Oleum (24,8 %) eingetragen, in einer Stunde auf 80°C erwärmt und 15 Stunden bei 80°C gerührt. Nach dieser Zeit betrug das Absorptionsmaximum 621 nm. Unter Kühlung setzte man 24 Teile Wasser zu und ließ die Mischung in 1650 Teile Wasser einlaufen. Dann setzte man 266 Teile Tri-2-ethylhexylamin zu, erhitzte auf 100°C und rührte 45 Minuten bei dieser Temperatur. Nach dem Abstellen des Rührers ließen sich 1598 Teile einer schwefel-säurehaltigen wäßrigen Lösung unten abtrennen. Nach einstündigem Verrühren des Ansatzes mit weiteren 352 Teilen Wasser bei 100°C ließen sich nach dem Absitzen noch einmal 587 Teile saures Abwasser abtrennen. Die verbliebene Harzmasse wurde mit 180 Teilen Wasser, 45 Teilen Neopentylglykol und 88 Teilen Monoethanolamin auf 100°C erhitzt und im Laufe von dreißig Minuten zur Lösung gebracht. Durch Phasentrennung gewann man 431 Teile der unten angesammelten wäßrigen Farbstofflösung, die bei maximal 621 nm absorbiert. Von dem lipophilen Amin wurden 252 Teile zurückgewonnen.

### Beispiel 3

In 235,4 Teile Oleum (15,2 %) trug man unter Rühren 57,6 Teile Kupferphthalocyanin während 80 Minuten ein. Dann erhitzte man in 60 Minuten auf 100°C und rührte 8 Stunden lang bei dieser Temperatur, bis ein Absorptionsmaximum von 613 nm erreicht war. Die abgekühlte Mischung wurde in 865 Teile Wasser eingetragen, mit 245 Teilen Tri-(2-ethylhexyl)amin versetzt und 30 Minuten lang bei 100°C zu einer flüssigen Masse verrührt. Nach einstündigem Absitzen ließen sich 804 Teile wäßrige Schwefelsäure als untere Phase abtrennen.

Das Farbharz wurde noch einmal mit 800 Teilen Wasser eine halbe Stunde bei 100°C ausgerührt. Nach abgestellter Rührung ließen sich 963 Teile schwefelsaures Wasser abtrennen.

Das gewaschene Harz wurde mit 160 Teilen Wasser, 45 Teilen Triethanolamin und 39 Teilen Monoethanolamin heiß in Lösung gebracht. Von der entstandenen Farbstoff lösung mit Absorptions-maximum bei 613 nm ließen sich 401 Teile als untere wäßrige Phase abtrennen; 248 Teile einer lipophilen Phase wurden zurückgewonnen, die im wesentlichen aus dem wasserunlöslichen Amin besteht.

### Beispiel 4

Man mischte 191,7 Teile Oleum (24 %) und 38,3 Teile Schwefel Säure. Unter Rühren trug man in ein bis zwei Stunden 57,6 Teile Kupferphthalocyanin ein und erwärmte in 60 Minuten auf 100°C. Nachdem der Ansatz vier Stunden bei 100°C gerührt wurde (λₘₐₓ = 617 nm), kühlte man auf 40 bis 35°C ab, vermischte mit 1000 Teilen Wasser, 242 Teilen Tri-2-ethylhexylamin, erhitzte erneut auf 100°C und rührte eine Stunde lang. Dann ließ man absitzen und trennte die unten angesammelte heiße verdünnte Schwefelsäure ab (978 Teile) . Das Farbharz wurde mit 1000 Teilen Wasser noch einmal bei 100°C unter Rühren gewaschen. Danach erhielt man 1154 Teile saures Waschwasser.

Das verbliebene Harz wurde mit 270 Teilen Wasser, 27 Teilen Mono-und 45 Teilen Triethanolamin bei 100°C in Lösung gebracht. Von 236 Teilen der leichten organischen Phase setzten sich unten 497 Teile einer konzentrierten Lösung des Farbstoffs ab, dessen maximale Absorption bei 617 nm liegt.

### Beispiel 5

57,6 Teile Kupferphthalocyanin wurden in 50 Minuten in 230.4 Teile Oleum (23,7%) eingetragen, auf 100°C erhitzt und zwei Stunden bei 100°C gerührt, bis das Absorptionsmaximum 616 nm betrug. Nach dem Abkühlen mischte man den Ansatz mit 1000 Teilen Wasser, 242 Teilen Tri-(2-ethylhexyl)-amin, rührt 40 Minuten lang bei 100°C und ließ ohne zu rühren erkalten. Danach ließen sich 1012 Teile wäßrige Schwefelsäure als untere Phase abtrennen. Nach erneutem 60-minütigen Verrühren der Harzmasse mit weiteren 1000 Teilen Wasser bei 100°C ließen sich 1128 Teile schwefelsaures Abwasser abtrennen. Das verbliebene Harz wurde mit 260 Teilen Wasser, 28 Teilen 2,2-Dimethylpropandiol, 45 Teilen Triethanolamin und 26 Teilen Monoethanolamin bei 100°C gelöst. Nach dem Absitzen trennte man als untere Phase 515 Teile einer konzentrierten Farbstofflösung ab; der Farbstoff hat ein Absorptionsmaximum bei 616 nm. Es blieben 233 Teile einer organischen Phase zurück, die hauptsächlich aus dem lipophilen Amin bestand.

## Patentansprüche

1. Verfahren zur Herstellung von sulfonsäuregruppenhaltigen Cu-Phthalocyaninfarbstoffen mit einem Absorptionsmaximum λₘₐₓ. 605 nm, dadurch gekennzeichnet, daß man Cu-Phthalocyanin mit mindestens 15 gew. -%igem Oleum so lange auf Temperaturen von ungefähr 50 bis 110°C erhitzt, bis das Reaktionsprodukt ein Absorptionsmaximum ≥ 605 nm aufweist, anschließend das erhaltene Sulfierungsprodukt mit Wasser verdünnt, ein tertiäres, lipophiles Amin zugibt und bei erhöhter Temperatur so lange rührt, bis sich die das Ammoniumsalz enthaltende lipophile Phase von der wäßrigschwefelsauren Phase abtrennt, anschließend die lipophile Phase gegebenenfalls nach dem Waschen mit Wasser, mit einer wasserlöslichen Base, deren sulfonsaures Salz hergestellt werden soll, und Wasser versetzt, die entstehenden Phasen trennt und das Salz in der wäßrigen Lösung beläßt oder es daraus isoliert.

2. Verfahren gemäß Anspruch 1, dadurch gekennzeichnet, daß man 20 bis 30 gew. -%iges Oleum verwendet.

3. Verfahren gemäß Anspruch 1, dadurch gekennzeichnet, daß man bei Temperaturen von 60 bis 100°C sulfiert.

4. Verfahren gemäß Anspruch 1, dadurch gekennzeichnet, daß man sulfonsäuregruppenhaltige Cu- Phthalocyaninfarbstoffe mit Absorptionsmaxima von 605 bis 625 nm herstellt.

5. Verfahren gemäß Anspruch 1, dadurch gekennzeichnet, daß man als lipophiles Amin Tri-2-ethylhexylamin verwendet.

6. Sulfonsäuregruppenhaltige Cu-Phthalocyaninfarbstoffe mit Absorptionsmaxima λₘₐₓ ≥ 605 nm mit Tri-2-ethylhexylamin als Kation.
